# EUROPEAN PATENT APPLICATION

(11) **EP 4 292 769 A1**
(43) Date of publication of application: **20.12.2023**
(21) Application number: 23179667.3
(22) Date of filing: 16.06.2023
(51) Int. Cl.: B25G 1/04, A01G 2/00

(54) **LOCKING DEVICE AND GARDEN TOOL USING LOCKING DEVICE**

(30) Priority: 17.06.2022 CN 202210692255
(71) Applicant: Techtronic Cordless GP, Anderson, SC 29621 (US)
(72) Inventor: WANG, Zheng Jun, Dongguan City (CN); LI, Jin Cheng, Dongguan City (CN); XU, Hai Yu, Dongguan City (CN)
(74) Representative: Novagraaf Group

(57) **Abstract**

Disclosed are a locking device and a garden tool using a locking device. The locking device comprises: a pole connector (100) configured to be mounted on a pole (20) extending along the longitudinal axis (L); an operating member (200) rotatable around the rotation axis (A1) between a locked position and an unlocked position; a locking component (300) that, when the operating member is in the locked position, applies a locking force to the pole connector so that the pole connector clamps the pole. The locking component (300) comprises a cam locking unit (301), wherein the rotation axis (A1) is transverse to the longitudinal axis (L), and the direction of locking force is parallel to or coincident with the rotation axis (A1).

## Description

### Technical Field

The present invention relates to a locking device, and particularly to a locking device for a garden tool.

### Background Art

Garden tools are mechanised tools for maintaining lawns, hedges, trees, etc. One kind of garden tools have poles, such as push poles for lawn mowers, connecting poles for lawn mowers, and extension poles for pole tree pruners and pole saws. A pole is usually designed as a telescopic pole comprising a plurality of pipes that are slidable relative to each other. For the convenience of operations by a user, with some pole-type garden tools, the handle is fixed on the pole, and the user is allowed to adjust the position of the handle.

To ensure safety, when a garden tool is operating, the length of the telescopic pole should be locked, and the handle should be unmovable relative to the pole. This requires the use of a locking device mounted on the pole. With most garden tools, knobs and bolts are used as locking devices, and a user may tighten and loosen the bolts for locking and unlocking. However, when a garden tool has operated for a long time, its bolts may become loose. In addition, tightening and loosening of bolts requires the application of a considerable force to the knob, which affects user experience.

Therefore, a locking device is needed that ensures reliable locking and is easy to operate.

### Summary of the Invention

To achieve the above purpose, the present invention provides a locking device comprising: a pole connector configured to be mounted on a pole extending along the longitudinal axis; an operating member rotatable around the rotation axis between a locked position and an unlocked position, wherein, when the operating member is in the unlocked position, the pole connector is movable along the longitudinal axis on the pole, and, when the operating member is in the locked position, the position of the pole connector relative to the pole is locked; and a locking component, which, when the operating member is in the locked position, applies a locking force to the pole connector so that the pole connector clamps the pole. The locking component comprises a cam locking unit, the rotation axis of which is transverse to its longitudinal axis, and the direction of its locking force is parallel to or coincident with the rotation axis.

In one embodiment, the cam locking unit may comprise a pair of cams. When the operating member moves from the unlocked position to the locked position, the first cam in the pair of cams rotates relative to the second cam and forces the second cam to apply a locking force to the pole connector. The width of a pair of cams is defined as the dimension of the first and second cams as a whole in the direction of the rotation axis. When the operating member moves from the unlocked position to the locked position, the width of a pair of cams increases.

In one embodiment, the pole connector may comprise a connector body at least partially surrounding the pole and a leg extending from the connector body. When the operating member is in the locked position, the locking component applies a locking force to the leg so that the connector body clamps the pole. The second cam may be mounted on the leg, nonrotatable relative to the leg, or the second cam may be integrated with the leg.

In one embodiment, the first and second cams are disc-shaped or columnar. The first cam has a first cam surface, and the second cam has a second cam surface. When the operating member is in the unlocked position, the first and second cam surfaces fit each other. When the operating member is in the locked position, the first and second cam surfaces are in only partial contact with each other.

In one embodiment, at least one of the first cam surface and the second cam surface may comprise a first curved surface, a second curved surface, a first step, and a second step. The first step and the second step both have heights in the direction of the rotation axis. The first curved surface starts from the first step and extends circumferentially, while the second curved surface starts from the second step and extends circumferentially. At least one of the first and second cam surfaces may further comprise a first flat surface and a second flat surface, wherein the first flat surface and the second flat surface circumferentially separate the first and second curved surfaces.

In one embodiment, the operating member may comprise a pivotable arm. When in the locked position, the pivotable arm is substantially parallel to the longitudinal axis. Preferably, the maximum angle at which the pivotable arm is pivotable between the locked position and the unlocked position does not exceed 90 degrees.

In one embodiment, the locking component may comprise a sleeve located between the pole connector and the operating member in the direction of the rotation axis and at least partially surrounding the cam locking unit. The sleeve may be made of an elastic material.

In one embodiment, the operating member may comprise a driving portion, and the locking device may comprise a driven portion fixedly connected to the first cam. When the operating member moves between the unlocked position and the locked position, the driving portion drives the driven portion to rotate and drives the first cam to rotate. The driven portion may have a noncircular cross-section in a plane perpendicular to the rotation axis. The driven portion may be formed on the outer surface of the first cam.

In one embodiment, the driven portion may have the shape of a nut and comprise a positioning portion protruding from the outer wall of the nut. The driving portion may comprise an opening that matches the shape of the nut and a positioning groove that matches the shape of the positioning portion.

In one embodiment, the locking device may comprise a shaft pin defining the rotational axis, which passes through the leg, the second cam, the first cam, and the driving portion. The shaft pin may be formed into a hollow shaft pin with an internal thread.

In one embodiment, the pole connector may comprise a guide portion that extends radially inwards relative to the connector body. When the operating member is in the unlocked position, the guide portion is movable in a guide groove formed on the pole. The guide portion can be formed into a guide pin that runs through the connector body.

In one embodiment, the pole connector may comprise a first leg and a second leg that extend from the connector body. The operating member may comprise a first pivotable arm and a second pivotable arm. The locking component may comprise a first cam locking unit and a second cam locking unit. The first cam locking unit is located between the first leg and one end of the first pivotable arm in the direction of the rotation axis. The second cam locking unit is located between the second leg and one end of the second pivotable arm in the direction of the rotation axis.

In one embodiment, the operating member may comprise a connecting arm. The other end of the first pivotable arm is connected to the other end of the second pivotable arm through the connecting arm. At least a portion of the connecting arm may have a contour that matches the shape of the pole.

On the other hand, the present invention further provides a pole-type garden tool comprising a toolhead, a pole connected to the toolhead, and a locking device as described above.

In one embodiment, the garden tool may comprise a handle connected to the pole through a coupling. A first joint may be formed on one of the coupling and the pole connector, while a plurality of second joints may be formed on the other thereof. The first joint may selectively fit one of the plurality of second joints to allow adjusting the orientation of the handle relative to the pole. The coupling and the pole connector may be fixed with fasteners. The plurality of second joints may comprise a plurality of grooves or teeth surrounding fasteners.

### Brief Description of the Drawings

Exemplary embodiments of the present invention will be described in detail below in conjunction with the drawings.
Fig. 1 is a locking device according to an embodiment of the present invention.
Fig. 2 is an exploded view of the locking device.
Fig. 3 is a pole connector according to an embodiment of the present invention.
Fig. 4 is an operating member according to an embodiment of the present invention.
Fig. 5 is a cam locking unit according to an embodiment of the present invention.
Fig. 6 shows the leg, the first cam, and the second cam of the pole connector.
Fig. 7A is the cam locking unit in an unlocked state.
Fig. 7B is the cam locking unit in a locked state.
Fig. 8A is the first cam surface according to an embodiment of the present invention.
Fig. 8B is a second cam surface according to an embodiment of the present invention.
Fig. 9 is a pole-type garden tool comprising a locking device according to the present invention.
Fig. 10 is a connecting mechanism between the handle and the pole of the garden tool.
Fig. 11 is an exploded view of a coupling according to an embodiment of the present invention.

### Specific Embodiments

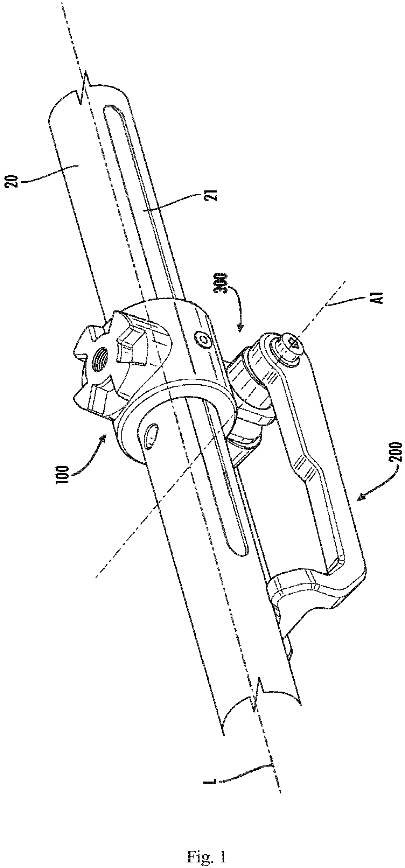

Fig. 1 is a locking device according to an embodiment of the present invention. The locking device comprises a pole connector 100, an operating member 200, and a locking component 300. The pole connector 100 is configured to be clasped on a pole 20 extending along the longitudinal axis L. The cross-section of the pole 20, rather than being limited to a circular shape, may be of any regular or irregular shape. The operating member 200 is used to lock and unlock the pole connector 100. In this embodiment, the operating member 200 is rotatable around the rotation axis A1 between the locked position and the unlocked position under the action of a user operation, the rotation axis A1 extending horizontally along the longitudinal axis L. When the operating member 200 is in the unlocked position, the pole connector 100 is movable along the longitudinal axis L on the pole 20. When the operating member 200 is in the locked position shown in the figure, the position of the pole connector 100 relative to the pole 20 is locked. The operating member 200 is preferably designed to be operable without using a tool. The operating member 200 may be in the form of a pole, a handle, a knob, or any other rotatable mechanism. The locking component 300 is arranged on the outer side of the pole connector 100. When the operating member 200 is in the locked position, the locking component 300 applies a locking force to the pole connector 100 so that the pole connector 100 clamps the pole 20. The direction of the locking force may be parallel to the rotation axis A1 or coincide with the rotation axis A1.

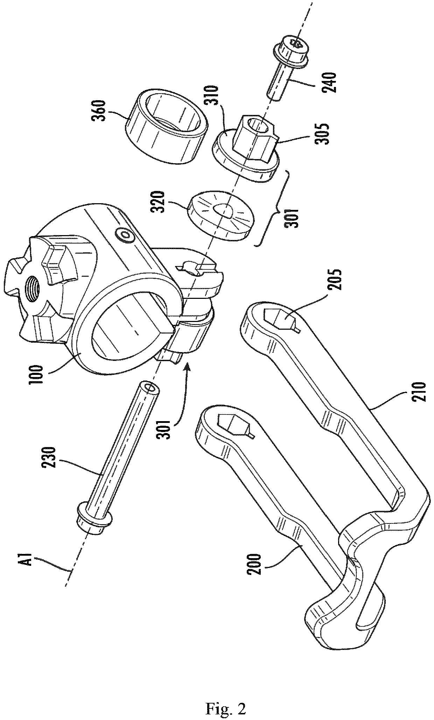

Fig. 2 is an exploded view of the locking device. The locking component 300 comprises two cam locking units 301 located on both sides of the pole connector 100 in the direction of the rotation axis A1. The cam locking unit 301 located on the left side of the pole connector 100 is shown in an assembled state, while the cam locking unit 301 located on the right side of the pole connector 100 is shown in a disassembled state. In this embodiment, each cam locking unit 301 comprises at least one pair of cams, wherein, when the operating member 100 moves from the unlocked position to the locked position, the first cam 310 in the pair of cams rotates relative to the second cam 320 and forces the second cam 320 to apply a locking force to the pole connector 100. Using two cam locking units 301 offers the advantage of it being possible to apply locking forces simultaneously to the pole connector 100 from both sides, thereby maintaining the positioning of the pole connector 100 on the pole 20 more firmly and stably. It is understandable that although two cam locking units 301 are shown in Fig. 2, an objective of the present invention is also achievable with one cam locking unit 301.

The operating member 200 comprises a pivotable arm 210 pivotable around the pivot axis A1 in a plane. The direction in which the cam locking unit 301 applies a locking force is perpendicular to the plane. As shown in Fig. 1, when in the locked position, the pivotable arm 210 is substantially parallel to the longitudinal axis L. Preferably, the maximum angle at which the pivotable arm is pivotable between the locked position and the unlocked position does not exceed 90 degrees, for example, between 30 degrees and 60 degrees. The operating member 200 further comprises a driving portion 205 designed to fit the driven portion 305, and the driven portion 305 is fixedly connectible to the first cam 310. When the operating part 200 moves between the unlocked position and the locked position, the driving portion 205 drives the driven portion 305 to rotate and drives the first cam 310 to rotate.

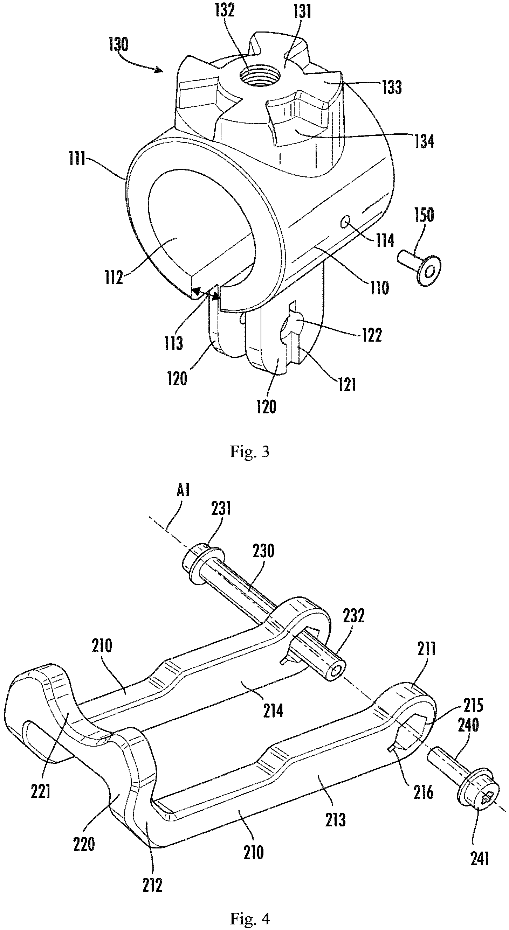

An embodiment of the pole connector 100 is shown in Fig. 3. The pole connector 100 comprises a connector body 110 at least partially surrounding the pole 20 and a leg 120 extending from the connector body. The connector body 110 comprises an outer wall 111 and an inner wall 112, and at least a portion of the inner wall 112 has a contour that matches the pole 20. The cross-section of the connector body 110 is unclosed, and there is a gap 113 between the two ends thereof. When the operating member 200 is in the locked position, the locking component 300 applies a force to the leg 120 so that the connector body 110 clamps the pole 20. In this embodiment, the pole connector 100 has two legs 120 that are parallel to each other and extend vertically downwards from both ends of the connector body 110. When the operating member 200 is in the locked position, the second cam 320 of the two cam locking units 301 applies forces to the two legs 120 from both sides to decrease the gap 113 between the two ends of the connector body 110, allowing the connector body 110 to, with the help of the inner wall 112 thereof, clamp the pole 20.

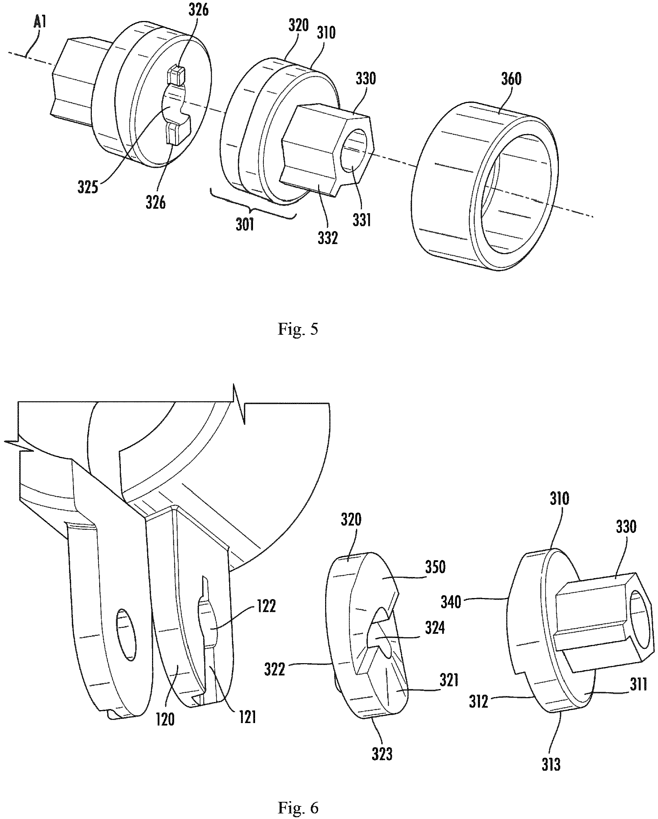

A groove 121 may be formed on the leg 120, and the groove 121 fits a protrusion 326 formed on the inner surface of the second cam 320 (as shown in Fig. 5) to fix the second cam 320 onto the leg 120, avoiding rotation of the second cam 320 relative to the leg 120. It is understandable that the design of the groove 121 and that of the protrusion 326 are not restrictive, and any feature able to prevent relative rotation of the leg 120 and the second cam 320 may be formed thereon. In an embodiment not shown, the second cam 320 may be fixed with the leg 120 by an adhesive or another means, and the second cam 320 may also be integrated with the leg 120. A through hole 122 is further formed on the leg 120, through which a pin roll 230 (shown in Fig. 2) defining the rotation axis A1 may pass.

The pole connector 100 further comprises a guide portion 150, which extends radially inwards relative to the connector body 110 and protrudes from the inner wall 112 of the connector body 110. The guide portion 150 may be integrally formed on the connector body 110 or may be an independent component, wherein, for example, the guide pin shown in Fig. 3 passes through the through hole 114 formed on the connector body 110. Referring to Fig. 1 again, a guide groove 21 extending along the longitudinal axis L is formed on the outer surface of the pole 20. When the operating member 200 is in the unlocked position, the guide portion 150 is movable in the guide groove 21 formed on the pole 20. The guide groove 21 defines the range of movement of the pole connector 100 on the pole 20. When the operating member 200 is in the unlocked position, the interaction between the guide portion 150 and the guide groove 21 can prevent the pole connector 100 from rotating relative to the pole 20 around the longitudinal axis L.

An embodiment of the operating member 200 is shown in Fig. 4. The operating member 200 comprises two pivotable arms 210 parallel to each other, each pivotable arm 210 having an outer surface 213, an inner surface 214, a first end 211 near the rotation axis A1, and a second end 212 away from the rotation axis A1. The driving portion 205 of the operating member 200 is formed at the first end 211 of the pivotable arm 210. The driving portion 205 may be an opening 215 with a noncircular cross-section. The opening 215 shown in the figure is a hexagonal opening connecting the outer surface 213 and the inner surface 214, in which a hexagonal driven portion 305 (shown in Fig. 2) is accommodated. The driving portion 205 may further comprise a positioning groove 216, which extends from the opening 215.

The operating member 200 may comprise a connecting arm 220, and the second ends 212 of the two pivotable arms 210 are connected to each other by the connecting arm 220. In this embodiment, at least a portion of the connecting arm 220 has a contour 221, for example, a recess, that matches the shape of the pole 20. It is conceivable that a retaining member, for example, a buckle, is arranged on the pole 20 and the connecting arm 220 to keep the two pivotable arms 210 in the locked position and prevent accidental unlocking of the operating member 200. Since the two pivotable arms 210 are pivotable around the same rotation axis A1, the connecting arm 220 ensures that both pivotable arms 210 move synchronously to the locked position or the unlocked position. This improves the user experience of operating the locking device, as a user does not need to operate two pivotable arms 210 separately.

Fig. 4 also shows the shaft pin 230, which defines the rotation axis A1. The shaft pin 230 has a head 231 and a pin portion 232. An internal thread may be formed in the pin 232 to engage with the external thread of a fastening bolt 240. In conjunction with Fig. 2, it is clear that after assembly, the shaft pin 230 passes through the leg 120 of the pole connector 100, the second cam 320, the first cam 310, and the driving portion 305. The head 231 of the shaft pin 230 and the head 241 of the fastening bolt 240 are respectively located on the outer sides of the two pivotable arms 210. When disassembling the locking device, a user can first remove the fastening bolt 240, for example, using a specific tool to loosen the fastening bolt 240, and then take out the shaft pin 230.

Fig. 5 is the cam locking unit 301 in a locked state. The cam locking unit 301 comprises a pair of cams, wherein the first cam 310 is located on the outer side and the second cam 320 is located on the inner side. The first cam 310 and the second cam 320 are both disc-shaped or columnar, and both have a specific width along the rotation axis A1. In this embodiment, the driven portion 305, which cooperates with the driving portion 205 of the operating member 200, is integrally formed with the first cam 310. The driven portion 305 extends outwards along the rotation axis A1 from the outer surface of the first cam 310, and the outer profile of the driven portion 305 has a noncircular cross-section in a plane perpendicular to the rotation axis A1. The driven portion 305 may comprise a nut-shaped hexagonal member 330, wherein a through hole 331 is formed within the hexagonal member 330, through which the shaft pin 230 may pass, and the through hole 331 may be smooth or formed with an internal thread. The driven portion 305 may further comprise a positioning portion 332 protruding from the outer wall of the hexagonal member 330. The hexagonal member 330 is accommodated in the hexagonal opening 215 located at the first end 211 of the pivotable arm 210, and the positioning portion 332 is accommodated in the positioning groove 216. Due to the coordination between the positioning portion 332 and the positioning groove 216, the driving portion 205 and the driven portion 305 may be assembled only in a predetermined orientation.

In Fig. 5, a sleeve 360 is also shown, which at least partially surrounds the cam locking unit 301 to protect it. The sleeve 360 is located between the pole connector 100 and the operating member 200 in the direction of the rotation axis A1, and covers the first cam 310 and the second cam. One side of the sleeve 360 abuts the leg 120 of the pole connector 100, and the other side thereof abuts the inner surface 214 of the pivotable arm 210. The sleeve 360 may be made of an elastic material and is deformable when subjected to pressure.

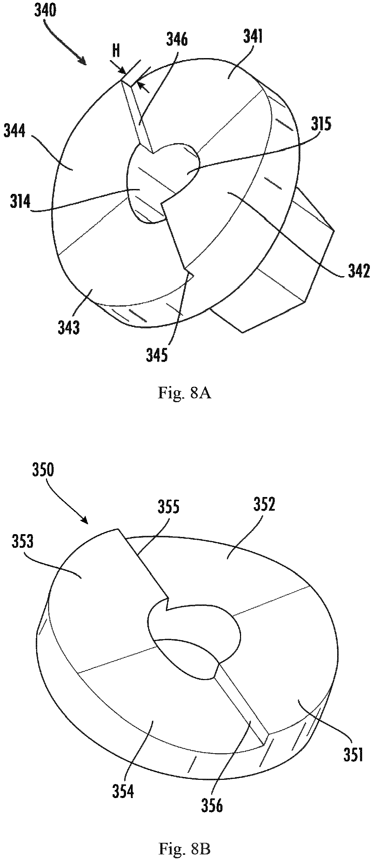

Fig. 6 shows the leg 120, the first cam 310, and the second cam 320 of the pole connector 100. The second cam 320 has an outer surface 321 away from the leg 120, an inner surface 322 near the leg, an outer peripheral surface 323, and an inner peripheral surface 324. From Fig. 5, it is clear that the inner surface 322 is substantially flat, with a protrusion 326 formed thereon, and the protrusion 326 is accommodated in a groove 121 formed on the leg 120. The inner peripheral surface 324 is formed with a through hole 325 through which the pin shaft 230 may pass. Similarly, the first cam 310 has an outer surface 311, an inner surface 312, an outer peripheral surface 313, and an inner peripheral surface 314 (shown in Fig. 8A). The inner peripheral surface 314 is formed with a through hole 315 through which the pin shaft 230 may pass. The hexagonal member 330 is formed on the outer surface 311.

The first cam 310 has a first cam surface 340 formed on the inner surface 312. The second cam comprises a second cam surface 350 formed on the outer surface 321. If the width of a pair of cams is defined as the size of the first cam 310 and the second cam 320 as a whole in the direction of the rotation axis A1, then when the operating member moves from the unlocked position towards the locked position, the rotation of the first cam 310 relative to the second cam 320 causes an increase in the width of the pair of cams. The increase in width forces the leg 120 to move inwards so that the connector body 110 clamps the pole 20.

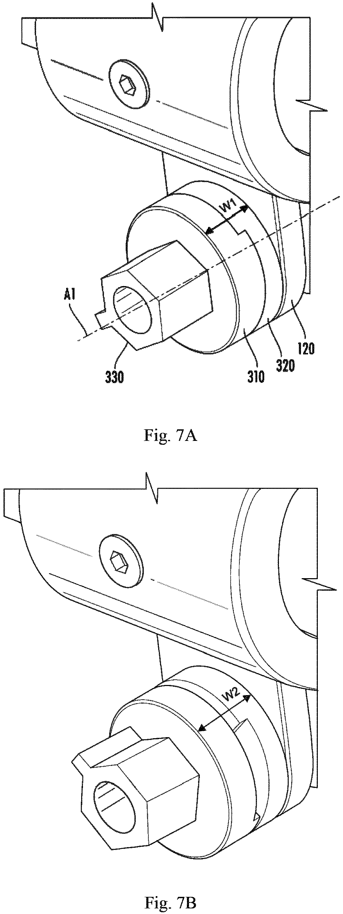

Fig. 7A and Fig. 7B show the cam locking units in the unlocked and locked states, respectively. When the operating member 200 is in the unlocked position, the first cam surface 340 and the second cam surface 350 fit each other, and the width W1 of a pair of cams is relatively small. At this point, the leg 120 is not subjected to pressure exerted by the second cam 320, or the leg moves inwards covering a relatively small distance when subjected to pressure. When the operating member 200 is in the locked position, the first cam surface 340 and the second cam surface 350 are in only partial contact with each other, and the width W2 of a pair of cams is relatively large. At this point, leg 120 is subjected to pressure and moves inwards covering a relatively large distance.

Fig. 8A and Fig. 8B show one embodiment of the first cam surface 340 and the second cam surface 350, respectively. The first cam surface 340 comprises a first curved surface 342, a second curved surface 344, a first step 345, and a second step 346. The first step 345 and the second step 346 both have a height H in the direction of the rotation axis A 1. The first curved surface 342 starts from the upper edge of the first step 345 and extends counter-clockwise around the rotation axis A1. The second curved surface 344 starts from the upper edge of the second step 346 and also extends counter-clockwise around the rotation axis A1. The second cam surface 350 comprises a first curved surface 352, a second curved surface 354, a first step 355, and a second step 356. The first curved surface 352 starts from the lower edge of the first step 355 and extends clockwise around the rotation axis A1. The second curved surface 344 starts from the lower edge of the second step 356 and also extends clockwise around the rotation axis A1.

In the embodiment shown in Fig. 8A, the first cam surface 340 further comprises a first flat surface 341 and a second flat surface 343. The first flat surface 341 and the second flat surface 343 circumferentially separate the first curved surface 342 and the second curved surface 344. Similarly, the second cam surface 340 further comprises a first flat surface 351 and a second flat surface 353, both of which circumferentially separate the first curved surface 352 and the second curved surface 354. When the operating member 200 is in the unlocked position, the two first curved surfaces 342 and 352 fit each other, and the two second curved surfaces 344 and 354 fit each other, in which case the width of a pair of cams is the smallest. When the operating member 200 is in the locked position, the first curved surface 342 of the first cam surface 340 contacts the first flat surface 351 of the second cam surface 350, and the second curved surface 344 of the first cam surface 340 contacts the second flat surface 353 of the second cam surface 350, in which case the width of a pair of cams is the largest.

It is understandable that specific shapes of the cam surface are not limited to the designs shown in Fig. 8A and Fig. 8B. For example, the cam surface may comprise no steps or flat surfaces. In an embodiment not shown, the first cam surface 340 may comprise a first inclined plane, and the second cam surface 350 may comprise a second inclined plane. When the operating member is in the unlocked position, the first inclined plane matches the second inclined plane, in which case the width of a pair of cams is the smallest.

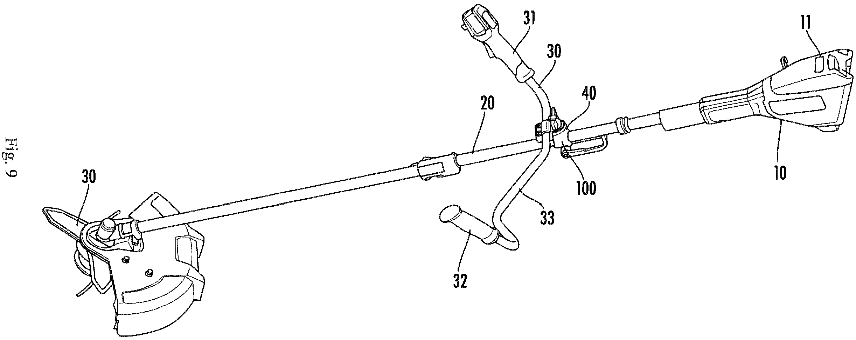

Fig. 9 is a pole-type garden tool comprising a locking device according to the present invention. The garden tool comprises a powerhead 10, a toolhead 30, and a pole 20 connecting the two. The pole connector 100 of the locking device is clasped on the pole 20. The toolhead 30 may be equipped with a cutting component for trimming a lawn, and the powerhead 10 may be equipped with an electric motor for driving the cutting component. The powerhead 10 may further provide a battery installation interface 11 for connecting a battery that supplies power to the electric motor. The garden tool further comprises a handle 30, which is connected to the pole 20 by a coupling 40, and the coupling 40 is joined to the pole connector 100. The handle 30 may comprise a connecting pole 33 and grips 31, 32 arranged at both ends of the connecting pole 33. A grip may be equipped with various user input components and display interfaces, including triggers, safety switches, speed control buttons, forward and reverse switches, and display screens.

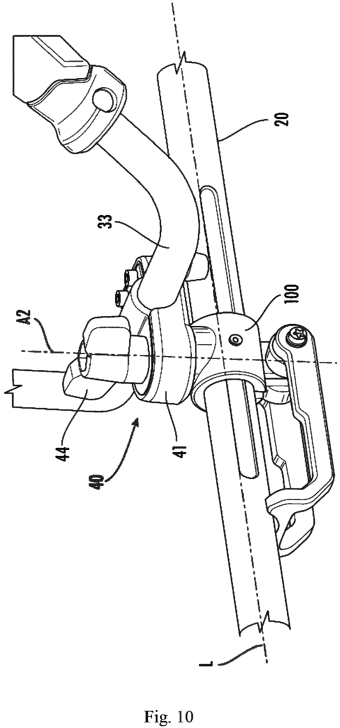

The connecting mechanism between the handle 30 and the pole 20 is shown in Fig. 10. The connecting mechanism comprises a coupling 40 located on the upper side and a locking device located on the lower side. The connecting pole 33 of the handle 30 is clamped by the coupling body 41, and the pole 20 is clamped by the pole connector 100. A locking member 44 is arranged above the coupling body 41, which may be a knob. A user fixes the coupling body 41 to the pole connector 100 by tightening the knob around the axis A2, thereby locking the orientation of the handle 30 relative to the pole 20. In this embodiment, the axis A2 is perpendicular to the longitudinal axis L.

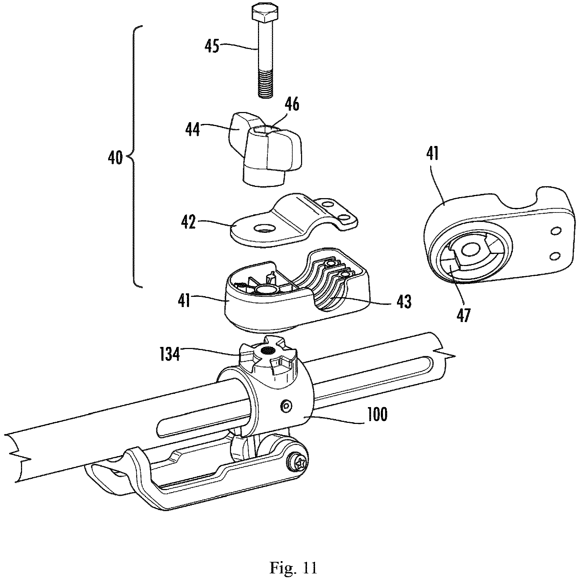

Fig. 11 is an exploded view of the coupling 40. The coupling 40 comprises a coupling body 41, a cover plate 42, a locking member 44, and a fastener 45. The cover plate 42 covers the top of the coupling body 41 and, together with the coupling body 41, defines a channel 43 for receiving the connecting pole 33. A through hole is formed on the coupling body 41, the cover plate 42, and the locking member 44, through which the fastener 45 may pass. In this embodiment, the fastener 45 is a bolt, and a hexagonal notch 46 for receiving a bolt head is formed on the locking member 44.

Referring to Fig. 3 again, the top 130 of the pole connector 100 comprises a centre portion 131, which defines a threaded hole 132, wherein the threaded hole 132 may engage with the thread on the fastener 45 passing through the coupling body 41. The top 130 further comprises a plurality of radial extension portions 133 surrounding the centre portion 131, and grooves 134 are formed between adjacent radial extension portions 133. In this embodiment, the groove 134 functions as the second joint on the pole connector 100, which can match the first joint on the coupling body 41 to prevent relative rotation of the pole connector 100 and the coupling body 41. The first joint may be a protrusion 47 formed at the bottom of the coupling body 41 (as shown in Fig. 11). The protrusion 47 can selectively fit one of the plurality of grooves 134, allowing the user to adjust the orientation of the handle 30 relative to the pole 20. In addition to the protrusion 47 and the groove 134 shown in the figure, the first joint and the second joint may also assume other forms, such as two sets of teeth, positioning pins, and positioning holes that engage with each other.

While the present invention has been described in detail in conjunction with limited embodiments, the present invention is not limited to these disclosed embodiments. Those skilled in the art can envisage other embodiments that conform to the spirit and scope of the present invention, including changes in quantities of components, alterations, substitutions or equivalent arrangements, and all such embodiments shall fall within the scope of the present invention.

## Claims

1. Locking device comprising:
a pole connector (100) configured to be mounted on a pole (20) extending along a longitudinal axis (L),
an operating member (200) rotatable around a rotation axis (A1) between a locked position and an unlocked position, wherein, when the operating member (200) is in the unlocked position, the pole connector (100) is movable along the longitudinal axis (L) on the pole (20), and, when the operating member (200) is in the locked position, the position of the pole connector (100) relative to the pole (20) is locked, and
a locking component (300), wherein, when the operating member (200) is in the locked position, the locking component (300) applies a locking force to the pole connector (100) so that the pole connector (100) clamps the pole (20),
wherein the locking component (300) comprises a cam locking unit (301), the rotation axis (A1) is transverse to the longitudinal axis (L), and the direction of the locking force is parallel to the rotation axis (A1) or coincides with the rotation axis (A1).

2. Locking device according to Claim 1, **characterized in that** the cam locking unit (301) comprises a pair of cams, wherein, when the operating member moves from the unlocked position towards the locked position, the first cam (310) in the pair of cams rotates relative to the second cam (320) and forces the second cam (320) to apply a locking force to the pole connector (100).

3. Locking device according to Claim 2, **characterized in that** the width of the pair of cams is defined as a dimension of the first and second cams as a whole in the direction of the rotation axis (A1), wherein, when the operating member moves from the unlocked position towards the locked position, the width of the pair of cams increases.

4. Locking device according to Claim 2, **characterized in that** the pole connector (100) comprises a connector body (110) at least partially surrounding the pole (20) and a leg (120) extending from the connector body, and that, when the operating member (200) is in the locked position, the locking component (300) applies a locking force to the leg (120) so that the connector body (110) clamps the pole (20), wherein, preferably, the second cam (320) is mounted on the leg (120), nonrotatable relative to the leg (120), or the second cam (320) is integrally formed with the leg (120).

5. Locking device according to Claim 4, **characterized in that** the first cam (310) and the second cam (320) are disc-shaped or columnar, the first cam (310) having a first cam surface (340), the second cam (320) having a second cam surface (350), wherein, when the operating member (200) is in the unlocked position, the first cam surface (340) and the second cam surface (350) fit each other, and, when the operating member (200) is in the locked position, the first cam surface (340) and the second cam surface (350) are in only partial contact with each other.

6. Locking device according to Claim 5, **characterized in that** at least one of the first cam surface (340) and the second cam surface (350) comprises a first curved surface (342, 352), a second curved surface (344, 354), a first step (345, 355) and a second step (346, 356), wherein the first step and the second step both have a height (H) in the direction of the rotation axis, the first curved surface (342, 352) starts from the first step (345, 355) and extends in a circumferential direction, and the second curved surface (344, 354) starts from the second step (346, 356) and extends in a circumferential direction, wherein, preferably, at least one of the first cam surface (340) and the second cam surface (350) further comprises a first flat surface (341, 351) and a second flat surface (343, 353), the first flat surface (341, 351) and the second flat surface (343, 353) circumferentially separating the first curved surface (342, 352) and the second curved surface (344, 354).

7. Locking device according to Claim 5, **characterized in that** the first cam surface (340) comprises a first inclined plane and the second cam surface (350) comprises a second inclined plane, wherein, when the operating member is in the unlocked position, the first inclined plane matches the second inclined plane.

8. Locking device according to any one of Claims 1 to 7, **characterized in that** the operating member (200) comprises a pivotable arm (210), wherein, when in a locked position, the pivotable arm (210) is substantially parallel to the longitudinal axis (L), and, preferably, the maximum angle at which the pivotable arm is pivotable between the locked position and the unlocked position does not exceed 90 degrees.

9. Locking device according to any one of Claims 1 to 7, **characterized in that** the locking component (300) further comprises a sleeve (360) located between the pole connector (100) and the operating member (200) in the direction of the rotation axis (A1), and at least partially surrounding the cam locking unit (301), wherein the sleeve is preferably made of an elastic material.

10. Locking device according to any one of Claims 4 to 7, **characterized in that** the operating member (200) comprises a driving portion (205) and the locking device (300) comprises a driven portion (305) fixedly connected to the first cam (310), wherein, when the operating member (200) moves between the unlocked position and the locked position, the driving portion (205) drives the driven portion (305) to rotate and drives the first cam (310) to rotate, the driven portion (305) preferably having a noncircular cross-section in a plane perpendicular to the rotation axis (A1), and the driven portion (305) preferably being formed on an outer surface of the first cam (310).

11. Locking device according to Claim 10, **characterized in that** the driven portion (305) has the shape of a nut and comprises a positioning portion (332) protruding from the outer wall of the nut, and the driving portion (205) comprises an opening (215) that matches the shape of the nut and a positioning groove (216) that matches the shape of the positioning portion (332).

12. Locking device according to Claim 10, **characterized in that** the locking device further comprises a shaft pin (230) defining the rotational axis (A1), which passes through the leg (120), the second cam (320), the first cam (310), and the driving portion (305), wherein the shaft pin (230) is preferably a hollow shaft pin with an internal thread.

13. Locking device according to any one of Claims 4 to 7, **characterized in that** the pole connector (100) further comprises a guide portion (150), which radially extends inwards relative to the connector body (110), wherein, when the operating member (200) is in the unlocked position, the guide portion (150) is movable in the guide groove (21) formed on the pole (20), the guide portion (150) being preferably a guide pin that runs through the connector body (110).

14. Locking device according to any one of Claims 4 to 7, **characterized in that** the pole connector (100) comprises a first leg and a second leg that extend from the connector body (110), the operating member (200) comprises a first pivotable arm and a second pivotable arm, and the locking component (300) comprises a first cam locking unit and a second cam locking unit, wherein the first cam locking unit is located between the first leg and one end of the first pivotable arm in the direction of the rotation axis, and the second cam locking unit is located between the second leg and one end of the second pivotable arm in the direction of the rotation axis, wherein, preferably, the operating member (200) further comprises a connecting arm (220), the other end of the first pivotable arm and the other end of the second pivotable arm are connected to each other by the connecting arm (220), and preferably at least a portion of the connecting arm (220) has a contour (221) that matches the shape of the pole (20).

15. Pole-type garden tool comprising a toolhead (30), a pole (20) connecting the toolhead, and a locking device according to any one of Claims 1 to 14, wherein the pole connector (100) of the locking device is clasped on the pole (20).
